# EUROPÄISCHE PATENTSCHRIFT

(11) **EP 0 976 367 B1**
(45) Veröffentlichungstag und Bekanntmachung des Hinweises auf die Patenterteilung: **09.10.2002**
(21) Anmeldenummer: 99114557.4
(22) Anmeldetag: 24.07.1999
(51) Int. Cl.: A61C 5/12

(54) **Kofferdamhalter für zahnärztliche Behandlungen**
Holder for dental dam
Support pour digue de caoutchouc pour intervention endodontique

(30) Priorität: 30.07.1998 DE 29813627 U
(43) Veröffentlichungstag der Anmeldung: 02.02.2000
(73) Patentinhaber: Ahlers, Oliver M., Dr. med. dent., 20148 Hamburg (DE)
(72) Erfinder: Ahlers, Oliver M., Dr. med. dent., 20148 Hamburg (DE)
(74) Vertreter: Eisenführ, Speiser & Partner

(56) Entgegenhaltungen:
- WO-A-96/29952
- CH-A- 273 811

## Beschreibung

Die Erfindung betrifft einen rahmenförmigen Halter für ein Kofferdam-Gummituch für zahnärztliche Behandlungen.

Bei der zahnärztlichen Behandlung von Zähnen besteht häufig der Wunsch oder gar die Notwendigkeit, den jeweils behandelten Zahn (oder deren mehrere) gegenüber den benachbarten Zähnen oder der Mundhöhle abzuschirmen, etwa um den Zutritt von Speichel zum behandelten Zahn zu verhindern oder - umgekehrt - Behandlungsflüssigkeiten und andere -werkstoffe nicht an die Umgebung des behandelten Zahns gelangen zu lassen. Diese Abschirmung erfolgt mit Hilfe eines als Kofferdam bezeichneten Gummituches, welches mit entsprechenden Öffnungen über die zu behandelnden oder weitere Zähne gezogen wird. Das Tuch legt sich rings um die betreffenden Zähne fest und flüssigkeitsdicht an.

Um sicherzustellen, daß das auf diese Weise den Zahn oder die Zähne umgebende Gummituch seine Abschirmfunktion auch im übrigen erfüllen kann, wird es an einem Halter befestigt, der das Gummituch außerhalb der behandelten Zähne über der Mundöffnung aufgespannt hält. Für diesen Zweck bekanntgeworden sind geschlossene Voll- oder offene (U-förmige) Halbrahmen aus Metall oder Kunststoff, über die jeweils das Gummituch gelegt und an denen es mittels spitzer Vorsprünge des Rahmens arretiert wird.

Diese Arretierung, d.h. Befestigung des Gummituchs am Halter, stellt im Stand der Technik ein erhebliches Problem bei der Kofferdam-Anwendung dar. Löst sich etwa das Gummituch vom Halter während der Zahnbehandlung, kann plötzlich die Abschirmwirkung des Kofferdams jedenfalls insoweit verlorengehen, als auf der Außenseite des Gummituchs befindliche Stoffe in die Mundhöhle gelangen können. Das ist insbesondere dann der Fall, wenn die Zahnbehandlung an den hinteren Seitenzähnen vorgenommen werden soll. In diesem Fall wird die Befestigung des Gummituches auf den zu isolierenden Zähnen, etwa durch Metallklammern, u.U. nachhaltig erschwert durch wenig retentive Zahnformen. Zur Abhilfe darf in derartigen Fällen das Gummituch nicht straff und flach über den Halter gespannt werden (vgl. *Winkler* "Kofferdam in Theorie und Praxis", Quintessenz Verlags-GmbH 1991), sondern muß eine gewisse Ausbeulung haben. Dann fehlt jedoch die für eine sichere Verankerung des Gummituchs an den Rahmen-Vorsprüngen erforderliche Spannung, und die Gefahr eines unerwünschten Lösens des Gummituchs vom Halter ist besonders groß.

Der Erfindung liegt daher die Aufgabe zugrunde, einen rahmenförmigen Kofferdamhalter anzugeben, welcher diesen Nachteil des Standes der Technik nicht besitzt und also insbesondere eine sichere Halterung des Gummituchs in allen zahnärztlichen Behandlungssituationen gewährleistet.

Diese Aufgabe löst die Erfindung durch die Merkmale des Anspruches 1. Auf diese Weise wird das Gummituch mit Mitteln des Halters selbst - ohne Mitwirkung der Gummituch-Spannung - am Halter sicher befestigt, und zwar auch dann, wenn je nach Behandlungssituation das Gummituch schlaff zwischen den Rahmenschenkeln durchhängt. Das Einklemmen des Gummituchs zwischen den gegeneinander klappbaren (U-förmigen) Halbrahmen erleichtert die Handhabung und erlaubt, bei der Anwendung den oberen Rand des Gummituchs rahmenfrei zu lassen (wie dies von den herkömmlichen einstückigen Halbrahmen an sich bekannt ist).

Die Befestigung des Gummituchs am Halter erfolgt vorzugsweise dadurch, daß an den beiden Rahmen ineinandergreifende Rippen bzw. Nuten angeordnet sind, die - mit entsprechendem Abstand ihrer Wandungen voneinander - das Gummituch umlenken und zwischen sich einklemmen. Eine derartige Arretierung ist von einer Spannung im Gummituch unabhängig. Soweit nicht mit Hilfe der ineinandergreifenden, der Gummituch-Festlegung dienenden Rippen und Nuten eine seitliche Relativverschiebung der beiden Rahmen gegeneinander ausgeschlossen wird, kann zur Vermeidung einer solchen Verschiebung im Betrieb ferner vorgesehen sein, daß sich die beiden Rahmen im geschlossenen Zustand übergreifen.

Durch den im Dokument FR-A-2 602 670 beschriebenen, nach seinem Erfinder *Sauveur* benannten Rahmen ist ein Kofferdamhalter bekanntgeworden, der aus zwei U-förmigen, an den freien Enden der Schenkel gelenkig miteinander verbundenen Halbrahmen besteht. Diese bilden jedoch im aufgeklappten - und nicht wie erfindungsgemäß im zusammengeklappten - Zustand den Kofferdamhalter in Form eines geschlossenen Vollrahmens, und das Gummituch wird *über* die von beiden Halbrahmen umschriebene Fläche gespannt. Die im Einsatz senkrecht - und nicht wie erfindungsgemäß waagerecht - verlaufende Schwenkachse soll dazu dienen, jeweils eine Hälfte des Kofferdams aufzuklappen, um Röntgenkontrollen in der Endodontie besser vornehmen zu können. Gehalten wird das Gummituch am *Sauveur*-Rahmen wie im übrigen Stand der Technik an Vorsprüngen der beiden Halbrahmen, die sich bei entsprechender Spannung in das Gummituch eingraben.

Ein ähnlicher Doppelrahmen wird auch im Dokument WO-A-9629952 beschrieben, das den Oberbegriff des Anspruchs 1 bildet.

Die Zeichnung veranschaulicht die Erfindung an einem Ausführungsbeispiel; darin zeigt:

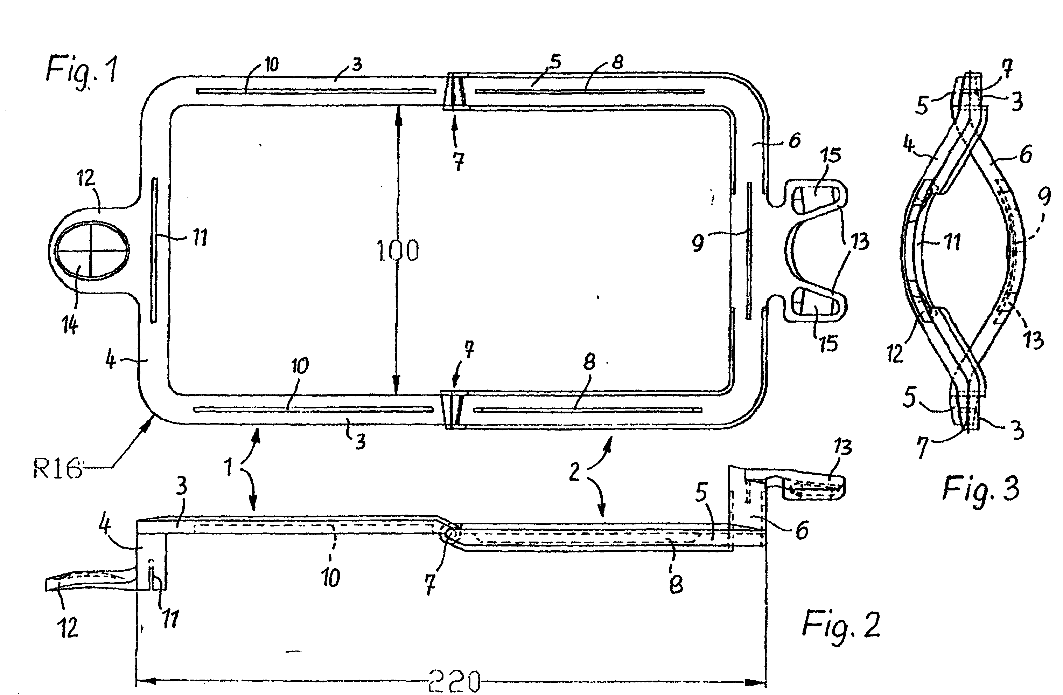

- Fig. 1: eine Draufsicht auf den erfindungsgemäßen Kofferdamhalter im aufgeklappten Zustand;
- Fig. 2: eine Seitenansicht des Halters in Fig. 1;
- Fig. 3: eine Stirnansicht des Halters in Fig. 1; und

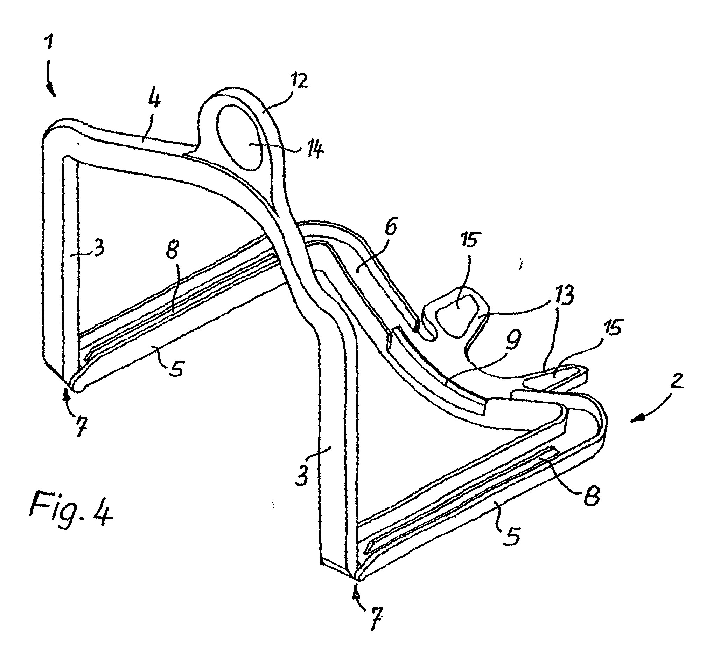

- Fig. 4: eine perspektivische Ansicht des Halters in halb geschlossenem Zustand.

Der erfindungsgemäße Kofferdam-Halter besteht hauptsächlich aus zwei im wesentlichen deckungsgleichen Halbrahmen 1, 2. Der Halbrahmen 1 ist von zwei Schenkeln 3 und einem deren eine Enden verbindenden Steg 4 gebildet; der Halbrahmen 2 in ähnlicher Weise von zwei Schenkeln 5 und einem diese verbindenden Steg 6. An ihren freien Enden sind die Schenkel 3, 5 bei 7 mittels (nicht dargestellten) Gelenkstiften gelenkig miteinander verbunden.

Abgesehen von den noch anzusprechenden Rippen bzw. Nuten hat der Halbrahmen 1 einen im wesentlichen flach-rechteckigen Querschnitt, der Halbrahmen 2 einen U-förmigen Querschnitt von einer solchen inneren Weite, daß im geschlossenen Zustand des Kofferdam-Halters der Halbrahmen 2 den Halbrahmen 1 entlang beider Schenkel 3 und weitgehend auch entlang dem Steg 4 übergreift und schon auf diese Weise eine formschlüssige Verbindung zwischen den beiden Halbrahmen 1, 2 herstellt, welche jegliche Relativ-Verschiebung bei der Benutzung des geschlossenen Halters verhindert. Ferner dient dies Übergreifen der Festlegung des - nicht dargestellten - Gummituches zwischen beiden Halbrahmen 1, 2, und die Festlegung des Gummituches wird zusätzlich durch Rippen 8, 9 verstärkt, welche zentrisch am Boden der im Querschnitt U-förmigen Schenkel 5 und des ebenfalls im Querschnitt U-förmigen Stegs 6 des Halbrahmens 2 angeformt sind und im geschlossenen Zustand des Kofferdam-Halters in komplementäre Nuten 10, 11 greifen, welche in den Schenkeln 3 bzw. im Steg 4 des Halbrahmens 1 vorgesehen sind. Durch die ineinandergreifenden Halbrahmen 1, 2 und die Rippen 8, 9 bzw. Nuten 10, 11 wird das Gummituch umgelenkt und zwischen den Halbrahmen 1, 2 fest eingeklemmt. Dabei ist es möglich, dem Gummituch insbesondere zwischen den Gelenken 7, aber auch im übrigen zwischen den Schenkeln 3, 5 soviel Lose zu geben, daß es schlaff zwischen den Halbrahmen 1, 2 durchhängt.

Wie die Zeichnungsfiguren verdeutlichen, sind die Stege 4, 6 der Halbrahmen 1, 2 komplementär gekrümmt, damit sie sich besser der Gesichtsform des Patienten anpassen. Mittig sind an den Schenkeln 4 bzw. 6 die beiden Teile 12, 13 eines Rastverschlusses vorgesehen, welche im geschlossenen Zustand des Kofferdam-Halters die beiden Halbrahmen 1, 2 in ihrer ineinandergreifenden Stellung halten. An den Teilen 12, 13 geben Mulden 14, 15 den Fingern Widerhalt insbesondere beim Öffnen des Halters nach Gebrauch.

## Patentansprüche

1. Rahmenförmiger Halter für ein Kofferdam-Gummituch für zahnärztliche Behandlungen, welches zwischen zwei Rahmen (1, 2) kraft- und/oder formschlüssig festlegbar ist,
**dadurch gekennzeichnet, dass** dieser Rahmen im Wesentlichen deckungsgleiche Halbrahmen (1, 2) und an den freien Enden ihrer Schenkel (3, 5) gelenkig miteinander verbunden sind, wobei die Halbrahmen (1, 2) gegeneinander in einen geschlossenen Zustand klappbar sind, in dem sie einander überdecken und das Gummituch zwischen sich einklemmen.

2. Halter nach Anspruch 1,
**dadurch gekennzeichnet, dass** an den einander zugewandten Seiten der Halbrahmen (1, 2) komplementäre Rippen (8, 9) bzw. Nuten (10, 11) angeordnet sind, die im geschlossenen Rahmenzustand das Gummituch umlenken.

3. Halter nach Anspruch 1 oder 2,
**dadurch gekennzeichnet, dass** die Halbrahmen (1, 2) im Querschnitt einander übergreifen.

4. Halter nach einem der vorhergehenden Ansprüche,
**dadurch gekennzeichnet, dass** an den Halbrahmen (1, 2) Teile (12, 13) eines Rastverschlusses vorgesehen sind, der im geschlossenen Zustand die Halbrahmen (1, 2) in ihrer Relativstellung hält.

## Claims

1. Frame-like holder for a coffer-dam rubber cloth for dental treatments which can be fixed in force-locking and/or form-locking relationship between two frames (1, 2), **characterised in that** these frames are half-frames (1, 2) essentially in register and connected to each other pivotably at the free ends of their arms (3, 5), wherein the half-frames (1, 2) can be folded against one another in a closed state, in which they overlap each other and fix the rubber cloth between them.

2. Holder according to claim 1, **characterised in that** on the sides of the half-frames (1, 2) facing towards each other are arranged complementary ribs (8, 9) or grooves (10, 11) which deflect the rubber cloth in the closed state of the frame

3. Holder according to claim 1 or 2, **characterised in that** the half-frames (1, 2) engage over each other in cross-section

4. Holder according to one of the preceding claims, **characterised in that** parts (12, 13) of a locking closure, which holds the half-frames (1, 2) in their relative position in the closed state, are provided on the half-frames (1, 2)

## Revendications

1. Support en forme de cadre pour un voile en caoutchouc d'une digue de caoutchouc pour des traitements dentaires, qui peut être fixé, par adhérence et/par blocage, entre deux cadres (1, 2),
**caractérisé en ce que** ces cadres sont essentiellement des demi cadres (1, 2) coincidents et reliés l'un à l'autre, de manière articulée, au niveau des extrémités libres de leurs branches latérales (3, 5), sachant que les demi-cadres (1, 2) peuvent se rabattre l'un vers l'autre pour se fermer, en se recouvrant mutuellement et en coinçant ainsi le voile en caoutchouc à l'intérieur.

2. Support selon la revendication 1, **caractérisé en ce que**, au niveau des côtés se faisant face des demi-cadres (1, 2), sont disposées des nervures (8, 9) ou rainures (10, 11) complémentaires qui dévient le voile en caoutchouc lorsque le cadre est fermé.

3. Support selon la revendication 1 ou 2, **caractérisé en ce que** les demi-cadres (1, 2) se chevauchent mutuellement vus en coupe.

4. Support selon l'une quelconque des revendications précédentes, **caractérisé en ce que** sur les demi-cadres (1, 2) sont prévues des pièces (12, 13) de fermeture par encliquetage, qui maintiennent les demi-cadres (1, 2) dans leur position relative lorsqu'ils sont fermés.
